# EUROPEAN PATENT APPLICATION

(11) **EP 0 912 034 A2**
(43) Date of publication of application: **28.04.1999**
(21) Application number: 98108912.1
(22) Date of filing: 15.05.1998
(51) Int. Cl.: H04N 1/00

(54) **Anticipatory warm-up apparatus for a scanner light-source**

(30) Priority: 22.10.1997 US 955820
(71) Applicant: Hewlett-Packard Company, Palo Alto, California 94304 (US)
(72) Inventor: Christensen, Michael L., Windsor, CO 80550 (US)
(74) Representative: Schoppe, Fritz, Dipl.-Ing.

(57) **Abstract**

An apparatus for connecting electrical power to an exposure lamp (145) in a scanner (140) in response to near-by motion. Such an apparatus provides an apparent reduction in exposure lamp (145) warm-up time, with associated improvement in operator productivity, while minimizing lamp (145) operational life degradation and excessive energy consumption caused by leaving the lamp (145) turned on.

## Description

### BACKGROUND OF THE INVENTION

### 1. Field of the Invention

The present patent document relates generally to optical scanning devices used to translate the contents of printed documents into electronic format, and more particularly to the control of electrical power to such devices.

### 2. Description of Related Art

Several different types of light sources or lamps have been incorporated into optical scanners in order to illuminate the item being scanned. Among other things, the choice of lamp type and style is often based upon cost, size, lamp life, light intensity, output spectrum, power requirements, and turn-on time. Such lamps include cold cathode fluorescent, hot cathode fluorescent, xenon, and light emitting diode (LED) light sources.

In modern scanner systems, especially for those using the more popular cold cathode fluorescent lamps, the warm-up time for the scanner's light source is relatively long. For greater productivity, the scanner should be immediately available for use at any time. In a practical sense, the only technique by which this objective can he met is to leave the light source turned on all the time. However, if the light-source is on continuously, excessive power consumption and a large reduction in lamp operational life will result. As an example, cold cathode fluorescent lamps have an average lamp life of between 10,000 and 15,000 hours prior to burnout. If a cold cathode lamp is on for only 1,000 hours per year, the operational life of the lamp is approximately 10 to 15 years, and even at 2,000 hours per year, it is 5 to 7.5 years. However, if on continuously, the operational life of the lamp will be reduced to only 14 to 20 months. Thus, there is a significant need to improve the scanner system so as to reduce, at least, the operator perceived warm-up time for the light-source, while minimizing degradation in lamp operational life.

### SUMMARY OF THE INVENTION

Representative embodiments of the teachings of the present patent document provide enhanced capabilities not previously available to aid in the reduction of operator perceived lamp warm-up time in optical sag systems, while minimizing degradation of lamp operational life and controlling energy consumption. These capabilities provide possible increased productivity for an operator of such systems.

Representative embodiments of the present patent document incorporate a motion sensor and associated circuitry into a scanner system such that the exposure lamp is only turned on when there is motion near the scanner, such motion being indicative of nearby human activity. The potential for a reduction in operator perceived lamp warm-up time thus exists without requiring that the lamp be on continuously.

Since waiting for the exposure lamp in a scanner system to warm up can be expensive in terms of operator inefficiency, since lamp operational life is reduced in relation to the time the lamp is turned on, and since leaving a lamp on continuously consumes increased energy, representative embodiments of the present invention provide needed, enhanced capabilities not previously available. Other aspects and advantages of the representative embodiments of the present invention will become apparent from the following detailed description, taken in conjunction with the accompanying drawings, illustrating by way of example the principles of the invention. The details disclosed in the specification should not be read so as to limit the invention.

### BRIEF DESCRIPTION OF THE DRAWINGS

The accompanying drawings provide visual representations which will be used to more fully describe the representative embodiments of the present patent document and which can be used by those skilled in the art to better understand it and its inherent advantages. In the drawings, like reference numerals identify corresponding elements and:
FIGURE 1 is a drawing of a scanner system with a motion sensor and associated electronic circuitry.
FIGURE 2 is a drawing of another scanner system with a motion sensor and associated electronic circuitry.

### DESCRIPTION OF THE PREFERRED EMBODIMENT

As shown in the drawings for purposes of illustration, the present patent document relates to a novel apparatus for reducing operator perceived scanner exposure lamp warm-up time while minimizing lamp operational life degradation. Previously an operator was forced to either incur excessively long warm-up times or significant reductions in lamp operational life with associated increased energy consumption when using optical scanning machines. In the following detailed description and in the figures of the drawings, like elements are identified with like reference numerals.

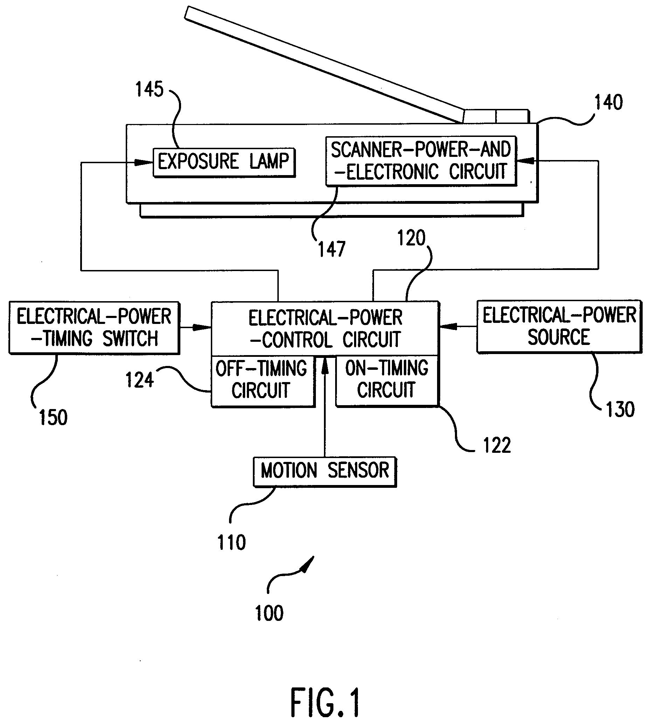

Referring to Figure 1, a representative embodiment of the apparatus described in the present patent document is shown wherein a scanner system **100** comprises a motion sensor **110** connected electrically to an electrical-power-control circuit **120**. The motion sensor **110** detects motion in the vicinity of a scanner **140,** the scanner **140** having an exposure lamp **145** for illuminating the item to be scanned. Such motion, in most cases, being the motion of an operator near the scanner. For purposes of the present patent document, this motion is assumed to be indicative of potential use of the scanner by the operator. The electrical-power-control circuit **120** connects electrical power from an electrical-power source **130** to the exposure lamp **145**, and in another embodiment, also to a scanner-power-and-electronic circuit **147** which is a component of the scanner **140,** following detection of motion, such as human activity, by the motion sensor **110**.

In another representative embodiment shown in Figure 1, the electrical-power-control circuit **120** incorporates an on-timing circuit **122** which disconnects the electrical-power source **130** from the exposure lamp **145**, and in yet another embodiment also from the scanner-power-and-electronic circuit **147**, if motion is not detected by the motion sensor **110** for a predefined period of time.

And in still another representative embodiment referring to Figure 1, an electrical-power-timing switch **150** is connected to the electrical-power-control circuit **120**. When the electrical-power-timing switch **150** is activated, it provides a signal to the electrical-power-control circuit **120** which disconnects the electrical-power source **130** from the exposure lamp **145**, and in another embodiment also from the scanner-power-and-electronic circuit **147**. For these embodiments, an off-timing circuit **124** prevents the electrical-power-control circuit **120** from responding to motion for a predefined period of time, allowing motion in the vicinity of the scanner-system **100** without re-connection of the electrical-power source **130** to the exposure lamp **145**, and in yet another embodiment also to the scanner-power-and-electronic circuit **147**.

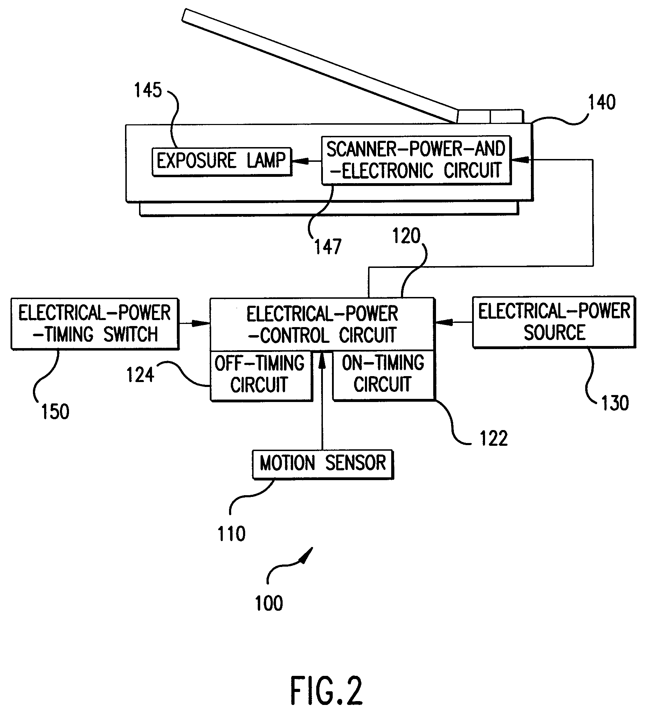

In yet another representative embodiment, as shown in Figure 2, the electrical-power-control circuit **120** is electrically connected to the scanner-power-and-electronic circuit **147** providing for conduction of electrical power from the electrical-power source **130** to the scanner-power-and-electronic circuit **147** and the scanner-power-and-electronic circuit **147** is electrically connected to the exposure lamp **145** providing for conduction of electrical power from the scanner-power-and-electronic circuit **147** to the exposure lamp **145** upon the detection of motion by the motion sensor **110**.

In another representative embodiment shown in Figure 2, the electrical-power-control circuit **120** incorporates an on-timing circuit **122** which disconnects the electrical-power source **130** from the scanner-power-and-electronic circuit **147**, if motion is not detected by the motion sensor **110** for a predefined period of time.

And in still another representative embodiment referring to Figure 2, an electrical-power-timing switch **150** is connected to the electrical-power-control circuit **120**. When the electrical-power-timing switch **150** is activated, it provides a signal to the electrical-power-control circuit **120** which disconnects the electrical-power source **130** from the scanner-power and-electronic circuit **147**. For this embodiment, an off-timing circuit **124** prevents the electrical-power-control circuit **120** from responding to motion for a predefined period of time, allowing motion in the vicinity of the scanner-system **100** without re-connection of the electrical-power source **130** to the scanner-power-and-electronic circuit **147**.

In practical cases, the electrical-power source **130** is the electric power provided by the wall electrical outlet of the building in which the scanner-system **100** is located.

Embodiments of the present patent document can be used to advantage in scanner systems **100** which use any type of exposure lamp **145** having a non-instantaneous, turn on time. A cold cathode fluorescent lamp is often used in commercial scanning machines and is an example of the type of exposure lamp **145** which would benefit from the advantages of incorporating a motion sensor **110** into the scanner system **100**, as described herein.

A primary advantage of the embodiments, as described in the present patent document, over previous techniques is the significant reduction in perceived exposure lamp warm-up time while minimizing lamp operational life degradation. Also, energy consumption is significantly less than if the scanner lamp is left on continuously. An added advantage is the fact that the decrease in perceived warm-up time can occur automatically, without operator action. Thus, embodiments of the present patent document solve important problems with operator productivity, lamp operational life, and energy consumption in the use of optical scanners.

## Claims

1. An apparatus comprising:
a scanner **[140]**;
an exposure lamp **[145]** in the scanner;
a motion sensor **[110]**; and
an electrical-power-control circuit **[120]** connected to the motion sensor, an electrical-power source **[130]**, and the exposure lamp, wherein the electrical-power-control circuit provides connection for conduction of electrical power from the electrical-power source to the exposure lamp upon detection of motion by the motion sensor.

2. The apparatus as in Claim 1, wherein the electrical-power-control circuit further comprises an on-timing circuit **[122]**, wherein the on-timing circuit provides connection for conduction of electrical power from the electrical-power source to the exposure lamp for only predefined period of time following detection of motion by the motion sensor.

3. The apparatus as in Claim 1 further comprising:
an electrical-power-timing switch **[150]** connected to the electrical-power-control circuit, wherein the electrical-power-control circuit further comprises an off-timing circuit **[124]**, wherein the off-timing circuit disconnects electrical power provided by the electrical-power source from the exposure lamp upon activation of the electrical-power-timing switch and wherein the off-timing circuit further prevents electrical power provided by the electrical-power-source from being reconnected to the exposure lamp for predefined period of time after the electrical-power-timing switch has been activated.

4. The apparatus as in Claim 1 wherein the exposure lamp comprises a cold cathode fluorescent lamp.

5. The apparatus as in Claim 1 wherein the electrical-power-control circuit further provides connection for conduction of electrical power from the electrical-power source to a scanner-power-and-electronic circuit **[147]** upon detection of motion by the motion sensor, wherein the scanner further comprises the scanner-power-and-electronic circuit.

6. The apparatus as in Claim 5, wherein the electrical-power-control circuit further comprises an on-timing circuit **[122]**, wherein the on-timing circuit provides connection for conduction of electrical power from the electrical-power source to the exposure lamp and from the electrical-power source to the scanner-power-and-electronic circuit for only predefined period of time following detection of motion by the motion sensor.

7. The apparatus as in Claim 5 further comprising:
an electrical-power-timing switch **[150]** connected to the electrical-power-control circuit, wherein the electrical-power-control circuit further comprises an off-timing circuit **[124]**, wherein the off-timing circuit disconnects electrical power provided by the electrical-power source from the exposure lamp and from the scanner-power-and-electronic circuit upon activation of the electrical-power-timing switch and wherein the off-timing circuit further prevents electrical power provided by the electrical-power-source from being re-connected to the exposure lamp and to the scanner-power-and-electronic circuit for predefined period of time after the electrical-power-timing switch has been activated.

8. The apparatus as in Claim 5 wherein the exposure lamp comprises a cold cathode fluorescent lamp.

9. An apparatus comprising:
a scanner **[140]**;
*an exposure lamp* **[145]** in the scanner;
a motion sensor **[110]**; and
an electrical-power-control circuit **[120]** connected to the motion sensor and an electrical-power source **[130]**; and
a scanner-power-and-electronic circuit **[147]** electrically connected to the electrical-power-control circuit and the exposure lamp, wherein the electrical-power-control circuit provides connection for conduction of electrical power from the electrical-power source to the scanner-power-and-electronic circuit and wherein the scanner-power-and-electronic circuit provides electrical connection for conduction of electrical power from the scanner-power-and-electronic circuit to the exposure lamp upon detection of motion by the motion sensor.

10. The apparatus as in Claim 9, wherein the electrical-power-control circuit further comprises an on-timing circuit **[122]**, wherein the on-timing circuit provides connection for conduction of electrical power from the electrical-power source to the scanner-power-and-electronic-circuit for only predefined period of time following detection of motion by the motion sensor.

11. The apparatus as in Claim 9 further comprising:
an electrical-power-timing switch **[150]** connected to the electrical-power-control circuit, wherein the electrical-power-control circuit further comprises an off-timing circuit **[124]**, wherein the off-timing circuit disconnects electrical power provided by the electrical-power source from the scanner-power-and-electronic circuit upon activation of the electrical-power-timing switch and wherein the off-timing circuit further prevents electrical power provided by the electrical-power-source from being re-connected to the scanner-power-and-electronic circuit for predefined period of time after the electrical-power-timing switch has been activated.

12. The apparatus as in Claim 9 wherein the exposure lamp comprises a cold cathode fluorescent lamp.
